## Europäisches Patentamt

## European Patent Office

## Office européen des brevets

(11) Veröffentlichungsnummer: **0 133 651**
**A2**

(12) ## EUROPÄISCHE PATENTANMELDUNG

(21) Anmeldenummer: **84107761.3**

(22) Anmeldetag: **04.07.84**

(51) Int. Cl.⁴: **A 47 B 95/04**

(30) Priorität: **12.08.83 DE 3329172**

(43) Veröffentlichungstag der Anmeldung:
**06.03.85 Patentblatt 85/10**

(84) Benannte Vertragsstaaten:
**AT DE FR GB IT NL SE**

(71) Anmelder: **Meier, Max**
**Landstrasse 14**
**D-7585 Lichtenau-Scherzheim(DE)**

(71) Anmelder: **Meier, Karl-Heinz**
**Landstrasse 14**
**D-7585 Lichtenau-Scherzheim(DE)**

(72) Erfinder: **Meier, Max**
**Landstrasse 14**
**D-7585 Lichtenau-Scherzheim(DE)**

(72) Erfinder: **Meier, Karl-Heinz**
**Landstrasse 14**
**D-7585 Lichtenau-Scherzheim(DE)**

(74) Vertreter: **Dr.-Ing. Hans Lichti Dipl.-Ing. Heiner Lichti**
**Dipl.-Phys. Dr. Jost Lempert**
**Postfach 41 07 60 Durlacher Strasse 31**
**D-7500 Karlsruhe 41(DE)**

(54) **Platte aus Holzwerkstoff.**

(57) Platten (1) aus Holzwerkstoff, wie Tischplatten, Abdeckplatten für Elektrogroßgeräte od.dgl. mit einem Plattenteil (2) und einer aus dessen Schnittflächen (11) unter Druck aufgespritzten Umrandung (8) aus thermoplastischem Kunststoff sind in vielfältigster und weitgehend zufriedenstellender Ausgestaltung bekannt. Ein Problem der Plattenteile (2) liegt darin, daß diese, insbesondere wenn sie eine große Fläche aufweisen, nicht verwindungs- und verzugsfest sind, was auch nicht durch die herkömmlichen Umrandungen (8) erreicht wird, so daß auch die mit der Umrandung versehene Platte (1) in dieser Hinsicht Probleme zeigen kann. Zur Behebung dieser Probleme wird bei Platte (1) aus Holzwerkstoff vorgesehen, daß die das Plattenteil (2) umschließende Umrandung (8) einen die Schnittflächen (11) abdeckenden Bereich (12) verlängernden, tief nach unten vorspringenden Ansatz (13) aufweist und daß eine obere äußere Kante (16) des Plattenteils (2) durch eine starke Materialanhäufung (17) des Kunststoffs übergriffen wird.

FIG. 3

DR. ING. HANS LICHTI · DIPL.-ING. HEINER LICHTI
DIPL.-PHYS. DR. JOST LEMPERT     0133651
PATENTANWÄLTE

D-7500 KARLSRUHE 41 (GRÖTZINGEN) · DURLACHER STR. 31 (HOCHHAUS)
TELEFON (0721) 48511

Max Meier                              03. Juli 1984
Landstraße 14
D-7585 Lichtenau-Scherzheim

Karl-Heinz Meier                       7262/84
Landstraße 14
D-7585 Lichtenau-Scherzheim

Platte aus Holzwerkstoff

Die Erfindung betrifft eine Platte aus Holzwerkstoff, wie Tischplatte, Abdeckplatte für Elektrogroßgeräte od.dgl., mit einem Plattenteil und einer auf dessen Schnittflächen unter Druck aufgespritzten Umrandung aus thermoplastischem Kunststoff.

Bei Platten der genannten Art bildet die Kunststoffumrandung in erster Linie einen Kantenschutz sowie eine Abdeckung der offenporigen Schnittflächen. Derartige Platten sind in vielfältiger Ausgestaltung, insbesondere hinsichtlich der Kunststoffumrandung bekannt und erfüllen ihre Funktion weitgehend zufriedenstellend. Ein Problem liegt aber darin, daß derartige Platten, insbesondere wenn Plattenteile mit nur geringer Stärke verwendet werden, nicht verwindungs- und verzugsfest sind, so daß die Gefahr besteht, daß sie sich verwinden oder verziehen und die obere Fläche der Platten uneben wird. Dieses Problem tritt insbesondere bei Abdeckplatten für Elektrogroßgeräte auf, bei denen nicht so starke Platten gewählt werden, wie dies bei selbsttragenden Tischplatten der Fall ist.

Doch kann auch bei letztgenannten Platten das Problem auftreten, wenn sie eine große Fläche aufweisen.

Der Erfindung liegt daher die Aufgabe zugrunde, eine gattungsgemäße Platte derart auszugestalten, daß ein Verwinden oder Verziehen derselben zuverlässig vermieden wird.

Erfindungsgemäß wird die genannte Aufgabe bei einer Platte der gattungsgemäßen Art mit einer unter Druck aufgespritzten Umrandung aus Kunststoff dadurch gelöst, daß die das Plattenteil umschließende Umrandung einen den die Schnittflächen abdeckenden Bereich verlängernden, tief nach unten vorspringenden Ansatz aufweist und daß eine obere äußere Kante des Plattenteils durch eine starke Materialanhäufung des Kunststoffs übergriffen wird. Plattenteil und Umrandung werden dadurch gegeneinander festgelegt, daß als Widerlager zu der den oberen Rand übergreifenden Materialanhäufung infolge des Einspritzdrucks Kunststoffmaterial in die Schnittflächen des Plattenteils eindringt, insbesondere bei Preßspanplatten od.dgl, so daß eine fest und praktisch unlösbare Verbindung erzielt wird. Vorzugsweise kann und wird insbesondere in den Fällen, in denen Plattenmaterialien verwendet werden, in denen ein nicht ausreichendes Eindringen des Kunststoffmaterials in das Plattenteil erfolgt, vorgesehen, daß ein die Platte untergreifender Steg am Ansatz angeformt ist. Dieser die Platte untergreifender Steg dient dann als Widerlager zu der übergreifenden Materialanhäufung. Schon die Formulierung, daß es sich um eine Materialanhäufung handeln soll, sagt aus, daß hier kein dünner, den oberen Rand des Plattenteils übergreifender Steg vorgesehen sein darf, da dieser ein Verziehen und insbesondere Verwinden der Platte nicht zuverlässig ausschließen könnte. Es sollte daher vorgesehen sein, daß die Materialanhäufung über dem Rand des Plattenteils der Materialmenge des Ansatzes entspricht,

wobei insbesondere die Materialanhäufung die Materialmenge des Ansatzes pro Längeneinheit übertreffen darf. Der Erfindungsgedanke wird weiterhin insbesondere dadurch unterstützt, daß die Materialanhäufung kompakt ausgebildet ist. Unter kompakt ist hierbei zu verstehen, daß im Querschnitt gesehen, die Materialanhäufung eine in der Größenordnung ihrer Dicke liegende Höhe haben soll, nicht also, wie schon angedeutet, als dünner sich weit über die Plattenoberseite erstreckender Steg ausgebildet sein sollte. Dem gegenüber kann der nach unten überstehende Ansatz recht dünn ausgebildet sein, wobei insbesondere die Stärke des Ansatzes der Stärke des abdeckenden Bereichs oder Abschnitts entspricht und der Ansatz und der die Schnittfläche abdeckende Bereich als verlängerter Schenkel der Umrandung ausgebildet ist. Der überstehende Ansatz weist in weiterer Ausgestaltung eine Höhe auf, die zumindest der Stärke des Plattenteils entspricht, bei dünnen Plattenteilen aber noch größer sein sollte.

Zur Vermeidung eines zu hohen durch das Kunststoffmaterial gebildeten Wulstes im Randbereich der Oberfläche des Plattenteils sieht eine weitere Ausgestaltung vor, daß am Umfangsrand des Plattenteils eine Stufe ausgebildet ist, die durch die Kunststoffmaterialanhäufung zumindest weitgehend ausgefüllt ist. Diese Stufe kann einfach als rechtwinklige, umlaufende Ausnehmung ausgebildet sein, wobei je nach Einsatz und Verwendungszweck und Anforderungen in technischer oder ästhetischer Hinsicht vorgesehen sein kann, daß die Oberfläche der Materialanhäufung im Bereich einer inneren oberen Kante des Plattenteils stetig in die Oberfläche übergeht oder aber daß die Materialanhäufung einen inneren oberen Rand der Stufe übergreift. Die erstgenannte Ausgestaltung bietet durch die Vermeidung eines jeglichen Wulstes eine ästhetisch vorteilhaftere Lösung, so daß erfindungsgemäße Platten in dieser Ausgestaltung bei Innenraummöbeln eingesetzt werden können, während die letztgenannte Ausgestaltung einen gewissen Spritzwasserschutz bildet. Während diese letztgenannte Ausgestaltung fertigungstechnisch, insbesondere auch wenn an der Unterseite eine Stufe vorgesehen sein soll, einfach herzustellen ist, ist eine Ausgestaltung, nach der in ansich bekannter Weise die Stufe als nach innen gerichtete Ausnehmung an dem oberen Rand des Plattenteils ausgebildet ist, etwas komplizierter herzustellen, beinhaltet aber eine absolute Wasserfestigkeit. Insgesamt wird durch die Erfindung eine verwindungs- und verzugsfreie Platte mit angespritztem Plattenrand geschaffen, da der thermoplastische Kunststoff schrumpft und der Schrumpf an den Stellen größter Materialanhäufung auch am ausgeprägtesten ist. Durch die erfindungsgemäße Ausgestaltung wird so der Platte eine hohe Stabilität gegeben, so daß Verwindungskräfte des Plattenteils durch die neue Ausgestaltung der Umrandung voll aufgefangen werden. Auch ein Durchbiegen der Platte wird verhindert.

Weitere Vorteile und Merkmale der Erfindung ergeben sich aus den Ansprüchen und aus der nachfolgenden Beschreibung, in der Ausführungsbeispiele der erfindungsgemäßen Platte im einzelnen erläutert sind. Dabei zeigt:

Figur 1              eine erste Ausführungsform einer erfindungsgemäßen Platte in wasserfester Ausgestaltung;

Figur 2              eine weitere Ausführungsform der erfindungsgemäßen Platte in bedingt wasserfester Ausgestaltung, bei Spritzwasser geeignet; und

Figur 3              eine weitere Ausführungsform der erfindungsgemäßen Platte, insbesondere für Innenraummöbel.

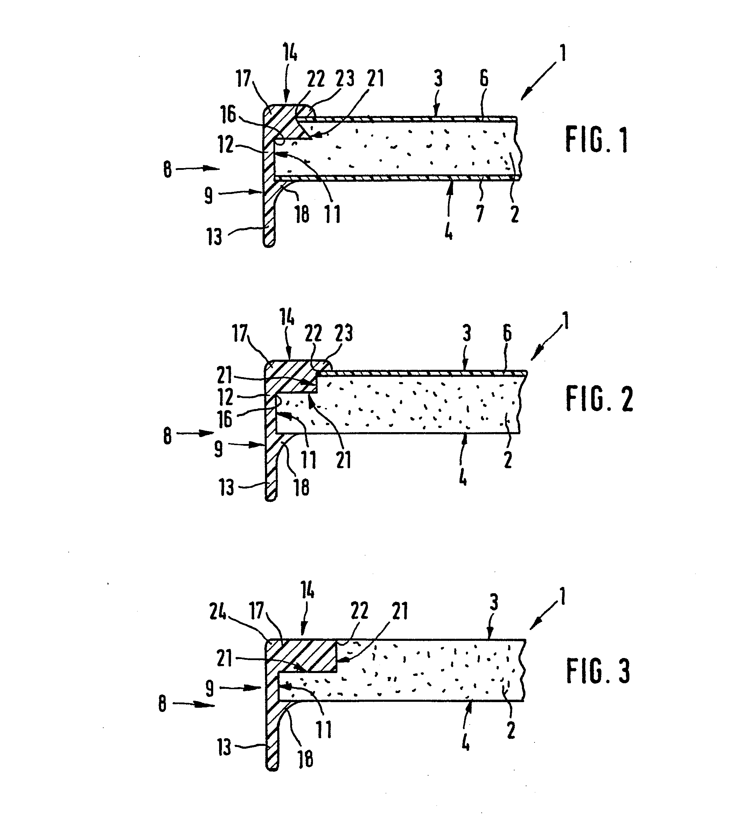

Die erfindungsgemäße Platte 1 besteht grundsätzlich aus einem Plattenteil 2 aus einem Holzwerkstoff, wie Preßspan, aber auch Sperrholz oder als Tischlerplatte, wobei das Plattenteil 2 im allgemeinen auf seiner Oberseite 3 und/oder der Unterseite 4 mit einer Beschichtung 6 , 7 versehen ist. Diese Beschichtung kann eine Melaminharzbeschichtung, eine Folienbeschichtung, eine Beschichtung aus in Melaminharz getränktem Papier, eine witterungs- und stoßsichere Kunststofflackschicht oder dergleichen und insbesondere in der erfindungsgemäßen Ausgestaltung der Figur 3 auch ein Furnier auf der eigentlichen Kernplatte sein. Weiterhin ist die Platte 1 mit einer umlaufenden Umrandung 8 aus spritzfähigem Kunststoff versehen, wobei diese bei einer eckigen Platte deren Ecken stark verrundet und die Umrandung mit einer entsprechenden Rundung versehen ist. Die Umrandung 8 wird durch Druckspritzen auf die seitlichen Schnittflächen der Platte 1 aufgebracht.

Die Umrandung 8 weist in dem in den Figuren dargestellten Querschnitt einen senkrecht zur Ober- und Unterseite 3, 4 nach unten ragenden Schenkel 9 auf, der aus einem die Schnittfläche 11 des Plattenteils 2 deckenden Teil 12 und einem dieses Teil 12 verlängernden, das Plattenteil 2 nach unten über die Unterseite 4 hinaus wesentlich überragenden Ansatz 13 besteht. Ein sich im wesentlichen am Schenkel 9 senkrecht erstreckender Schenkel 14 ist im Bereich des oberen Umfangsrandes des Plattenteils 2 an der Umrandung 8 ausgebildet. Der Schenkel 14 weist eine eine obere äußere Kante 16 des Plattenteils übergreifende Materialanhäufung 17 auf, deren Menge - pro Längeneinheit der Umrandung - derjenigen des nach unten überstehenden Ansatzes 13 entspricht. Auf der Unterseite 4 des Plattenteils 2 ist ein am Ansatz 13 angeformter, die Platte untergreifender Steg 18 ausgebildet, der als Widerlager zur Materialanhäufung 17 dient, so daß zwischen der Materialanhäufung 17 und dem Steg 18 der Rand des Plattenteils 2 verspannt ist. Der Rand des Plattenteils wird also zwischen Materialanhäufung 17 und Steg 18 verspannt, wogegen die Stabilität der Platte 1 senkrecht zu den Oberflächen 3, 4 und damit die Verwindungssteife der derart verspannten Platte durch den zusätzlichen langen Schenkel 9 der Umrandung 8 wesentlich bestimmt wird. Die Stärke des Schenkels 9 und insbesondere auch des Ansatzes 13 kann dabei relativ gering gehalten werden und wird dies auch vorzugsweise, wie dies in der Zeichnung dargestellt ist.

Die Materialanhäufung 17 könnte prinzipiell auch auf der Oberseite 3 des Plattenteils 2 ausgebildet sein. Doch würde dies bei der erforderlichen Materialmenge einen erheblichen Wulst geben. Es wird daher bevorzugt, insbesondere im oberen Randbereich des Plattenteils 2 eine Stufe 21 ausgebildet, wie sie bei den dargestellten Ausführungsbeispielen der erfindungsgemäßen Platte vorhanden ist.

Die Stufe bei der Ausgestaltung der Figur 1 ist eine spitzwinklige, nach innen gerichtete Ausnehmung der Schnittfläche 11 unterhalb einer spitzwinkligen inneren oberen Kante 22 der Oberfläche 3. Neben der äußeren oberen Kante 16 wird auch die innere obere Kante 22 von der Materialanhäufung 17 übergriffen. Hierdurch wird diese Ausgestaltung der erfindungsgemäßen Platte 1 zusammen mit der wasserdichten Befestigung 6 hochwasserfest, so daß selbst auf der Oberseite 3 Wasser stehen kann, ohne daß dies die Platte 1 beeinträchtigt, beispielsweise in das Kernplattenteil 2 dringen könnte, so daß die Ausgestaltung der Figur 1 im Freien und in sehr feuchten Bereichen eingesetzt werden kann.

Die Stufe 21 wird im allgemeinen durch Fräsen hergestellt. Die Erzielung der Ausgestaltung der Figur 1 kann dabei etwas aufwendig sein, insbesondere wenn an der Unterseite 4 des Plattenteils 2 auch eine Stufe ausgebildet sein soll. Falls keine sehr hohen Anforderungen an die Wasserfestigkeit gestellt werden sollen, so empfiehlt sich daher aus fertigungstechnischer Sicht eine Ausgestaltung der Figur 2, wobei die Stufe rechtwinklig ausgebildet ist, allerdings die innere obere Kante des Plattenteils 2 ebenfalls von der Materialanhäufung 17 übergriffen wird. Diese Ausgestaltung kann durchaus noch in Bereichen und Umgebungen eingesetzt werden, in denen Spritz-wasser nicht auszuschließen ist.

Es mag Anwendungen geben, insbesondere bei Innenraummöbeln, wobei der die innere obere Kante 22 übergreifende Wulst 23 als unbefriedigend, insbesondere in ästhetischer Hinsicht , empfunden wird. In diesem Falle kann die Materialanhäufung 17 dann auch stetig in die Oberfläche 3 des Plattenteils 2 übergehen, beispielsweise mit dieser Oberfläche 3 fluchten, wie dies in Figur 3 dargestellt ist, wobei die Verbindungskante 24 zwischen beiden Schenkeln 9, 14 der Umrandung 8 selbstverständlich auch stärker abgerundet sein könnte, soweit hierdurch nicht die erforderliche Materialanhäufung 17 im Schenkel 14 unterschritten wird.

Die in der vorstehenden Beschreibung, in der Zeichnung und in den Ansprüchen offenbarten Merkmale können in geeigneten Kombinationen für die Verwirklichung des Erfindungsgedankens in seinen verschiedenen Ausführungsformen wesentlich sein.

DR. INC. HANS LICHTI · DIPL.-INC. HEINER LICHTI
0133651
DIPL.-PHYS. DR. JOST LEMPERT
PATENTANWÄLTE

D-7500 KARLSRUHE 41 (GRÖTZINGEN) · DURLACHER STR. 31 (HOCHHAUS)
TELEFON (0721) 48511

Max Meier
Landstraße 14
D-7585 Lichtenau-Scherzheim

Karl-Heinz Meier
Landstraße 14
D-7585 Lichtenau-Scherzheim

03. Juli 1984

7262/84

## PATENTANSPRÜCHE

1. Platte aus Holzwerkstoff, wie Tischplatte, Abdeckplatte für Elektrogroßgeräte od.dgl., mit einem Plattenteil und einer auf dessen Schnittflächen unter Druck aufgespritzten Umrandung aus thermoplastischem
Kunststoff, dadurch gekennzeichnet, daß die das Plattenteil (2)
umschließende Umrandung (8) einen/den die Schnittflächen (11)
abdeckenden Bereich (12) verlängernden, tief nach unten vorspringenden Ansatz (13) aufweist und daß eine obere äußere Kante
(16) des Plattenteils (2) durch eine starke Materialanhäufung
(17) des Kunststoffs übergriffen wird.

2. Platte nach Anspruch 1, dadurch gekennzeichnet, daß ein die
Platte untergreifender Steg (18) am Ansatz (13) angeformt ist.

3. Platte nach Anspruch 1 oder 2, dadurch gekennzeichnet, daß die
Materialanhäufung (17) über dem Rand des Plattenteils (2) der
Materialmenge des Ansatzes (13) entspricht.

- 2 -

me

4. Platte nach Anspruch 1 oder 2, dadurch gekennzeichnet, daß die Materialanhäufung (17) über dem Rand des Plattenteils (2) die Materialmenge des Ansatzes (13) übertrifft.

5. Platte nach einem der vorangehenden Ansprüche, dadurch gekennzeichnet, daß die Materialanhäufung (17) kompakt ausgebildet ist.

6. Platte nach einem der vorangehenden Ansprüche, dadurch gekennzeichnet, daß die Stärke des Ansatzes (13) der Stärke des abdeckenden Bereichs (12) entspricht und beide als nach unten über die Unterseite (4) des Plattenteils (2) verlängerter Schenkel (9) der Umrandung (8) ausgebildet sind.

7. Platte nach einem der vorangehenden Ansprüche, dadurch gekennzeichnet, daß die Höhe des Ansatzes (13) zumindest der Stärke des Plattenteils (2) entspricht.

8. Platte nach einem der vorangehenden Ansprüche, dadurch gekennzeichnet, daß am Umfangsrand des Plattenteils eine Stufe (21) ausgebildet ist, die durch die Kunststoffmaterialanhäufung (17) zumindest weitgehend ausgefüllt ist.

9. Platte nach Anspruch 8, dadurch gekennzeichnet, daß die Oberfläche der Materialanhäufung (17) im Bereich einer inneren oberen Kante (23) des Plattenteils (2) stetig in die Oberfläche (3) übergeht.

10. Platte nach Anspruch 8, dadurch gekennzeichnet, daß die Materialanhäufung (17) einen inneren oberen Rand (22) der Stufe (21) übergreift.

11. Platte nach Anspruch 8 oder 10, dadurch gekennzeichnet, daß die Stufe als nach innen gerichtete Ausnehmung an dem oberen Rand des Plattenteils (2) ausgebildet ist.

0133651

FIG. 1

FIG. 2

FIG. 3